# EUROPEAN PATENT APPLICATION

(11) **EP 3 072 585 A1**
(43) Date of publication of application: **28.09.2016**
(21) Application number: 14861599.0
(22) Date of filing: 17.11.2014
(51) Int. Cl.: B01J 23/30, B01D 53/94, B01J 23/22, B01J 37/02

(54) **DENITRATION CATALYST AND METHOD FOR PRODUCING SAME**

(30) Priority: 18.11.2013 JP 2013237922
(71) Applicant: Hitachi Zosen Corporation, Osaka-shi, Osaka 559-8559 (JP)
(72) Inventor: HIKAZUDANI, Susumu, Osaka-shi Osaka 559-8559 (JP); HINO, Naoe, Osaka-shi Osaka 559-8559 (JP); YAMAMOTO, Seigo, Osaka-shi Osaka 559-8559 (JP)
(74) Representative: Wendels, Stefan
(86) International application number: PCT/JP2014/080370
(87) International publication number: WO 2015/072567

(57) **Abstract**

For a denitration catalyst used for a denitration treatment of a combustion exhaust gas, for example, from a coal-fired boiler or the like, such a denitration catalyst is provided that has a sufficient mechanical strength capable of retaining the catalyst shape, has a better catalyst performance than the ordinary denitration catalyst containing crystals of zirconium oxide, is low in production cost. In the denitration catalyst comprising, as a base material, a honeycomb structure consisting of an inorganic fiber sheet, titania, vanadium oxide and/or tungsten oxide, and a zirconium compound (except for crystalline zirconium dioxide) as a shape-retaining binder are supported on the honeycomb structure.

## Description

### Technical Field

The present invention relates to a denitration catalyst used for a denitration treatment of a combustion exhaust gas, for example, from a coal-fired boiler or the like, and a method for producing the same.

### Background Art

In general, the deterioration factors of a denitration catalyst applied to exhaust gas from a coal-fired boiler include attachment of slight amounts of heavy metals and arsenic contained in coal, and clogging with fly ash. Accordingly, in recent years, there have been increasing cases where a denitration catalyst having been aged and deteriorated is regenerated and reused.

As a method of the regeneration treatment of the denitration catalyst, it has been known that cleaning with an acid is effective for removing the heavy metals attached to the denitration catalyst, and cleaning with an alkali is effective for removing arsenic and fly ash.

On the other hand, a denitration catalyst that is produced by the known methods described in Patent Literature 1 (PTL 1) and Patent Literature 2 (PTL 2) shown below and the like uses a silica sol as a binder for retaining the catalyst shape, but has a problem in failure of regeneration in that the silica sol is inferior in alkali resistance, and thus the silica as a binder is eluted to fail to retain the shape in the alkali treatment conducted for regenerating the performance of the denitration catalyst having been aged and deteriorated.

Patent Literature 3 (PTL 3) shown below proposes the use of zirconia as an inorganic binder as a substitute of a silica sol. Patent Literature 4 (PTL 4) shown below proposes the use of a zirconia sol as a material for an inorganic binder.
PTL 1: Japanese Patent No. 4,881,716
PTL 2: Japanese Patent No. 5,022,697
PTL 3: JP-A-61-234935
PTL 4: JP-A-11-216370

### Disclosure of Invention

### Technical Problem

In PTL 3 described above, however, zirconium crystals are formed through calcination and thus have a problem in that a high temperature treatment of a denitration catalyst leads to sintering of titania and aggregation of vanadium in the catalyst components, and thereby the catalyst activity is significantly lowered. The zirconia sol used as a material for an inorganic binder in PTL 4 described above has a problem of increase in cost.

An object of the present invention is to provide such a denitration catalyst that can solve the problems in the conventional techniques described above, has a sufficient mechanical strength capable of retaining the catalyst shape in an alkali treatment conducted for regenerating the performance of the denitration catalyst having been aged and deteriorated, has a better catalyst performance than the ordinary denitration catalyst containing crystals of zirconium oxide, and furthermore can be produced at low cost, and also to provide a method for producing the same.

### Solution to Problem

As a result of earnest researches made by the present inventors in view of the aforementioned issues, that is, as a result of investigations for a method capable of retaining the shape without elution of the binder in an alkali treatment conducted for regenerating the performance of a catalyst having been aged and deteriorated, it has been found that a denitration catalyst that satisfies the demands can be obtained at low cost in such a manner that a slurry containing titania and ammonium metavanadate is prepared by using a water-soluble zirconium compound, the slurry is applied on an inorganic fiber sheet or a honeycomb structure formed therewith, or the inorganic fiber sheet or the honeycomb structure is dipped in the slurry, followed by drying, and then calcined, and thus the present invention has been completed.

For achieving the aforementioned object, the invention of claim 1 is a denitration catalyst comprising, as a base material, a honeycomb structure consisting of an inorganic fiber sheet, which is characterized in that titania, vanadium oxide and/or tungsten oxide, and a zirconium compound (except for crystalline zirconium dioxide) as a shape-retaining binder are supported on the honeycomb structure.

The invention of claim 2 is the denitration catalyst according to claim 1, which is characterized in that the zirconium compound (except for crystalline zirconium dioxide) as a shape-retaining binder is contained in the catalyst in an element ratio of from 1 to 20% by weight in terms of oxide.

The invention of claim 3 is the denitration catalyst according to claim 1, which is characterized in that the inorganic fiber sheet is a glass fiber sheet or a ceramic fiber sheet.

The invention of claim 4 is a method for producing a denitration catalyst comprising, as a base material, a honeycomb structure consisting of an inorganic fiber sheet, which is characterized in that the method comprises the steps of: preparing a slurry by adding ammonium metavanadate powder, or ammonium metavanadate powder and ammonium metatungstate to a slurry containing titania fine particles suspended in an aqueous solution of a zirconium salt; dipping a honeycomb structure consisting of an inorganic fiber sheet in the resulting slurry; taking out the structure from the slurry; then drying; and calcinating at 550°C or less.

The invention of claim 5 is a method for producing a denitration catalyst comprising, as a base material, a honeycomb structure consisting of an inorganic fiber sheet, which is characterized in that the method comprises the steps of: preparing a slurry by adding ammonium metavanadate powder, or ammonium metavanadate powder and ammonium metatungstate to a slurry containing titania fine particles suspended in an aqueous solution of a zirconium salt; dipping an inorganic fiber sheet in the resulting slurry, taking out the sheet from the slurry, and then drying, or applying the resulting slurry on an inorganic fiber sheet; then producing a catalyst-containing fiber sheet in a corrugated shape from a part of the resulting catalyst-containing fiber sheet in a flat shape through a corrugating process; calcinating the catalyst-containing fiber sheets in a flat shape and a corrugated shape at 550°C or less; and stacking alternately the calcined catalyst-containing fiber sheets in a flat shape and a corrugated shape, so as to form a catalyst-supporting honeycomb structure.

The invention of claim 6 is the method for producing a denitration catalyst according to claim 4 or 5, which is characterized in that the calcination is performed at from 300 to 550°C.

The invention of claim 7 is the method for producing a denitration catalyst according to claim 4 or 5, which is characterized in that the aqueous solution of the zirconium salt is an aqueous solution of zirconium acetate, zirconium chloride, or zirconium nitrate.

### Advantageous Effects of Invention

The denitration catalyst of the present invention exhibits such an effect that for a denitration catalyst used for a denitration treatment of a combustion exhaust gas, for example, from a coal-fired boiler or the like, the denitration catalyst has a sufficient mechanical strength capable of retaining the catalyst shape in an alkali treatment conducted for regenerating the performance of the denitration catalyst having been aged and deteriorated, and has a better catalyst performance than the ordinary denitration catalyst containing crystals of zirconium oxide.

The method for producing a denitration catalyst of the present invention exhibits such an effect that the aforementioned denitration catalyst having a sufficient mechanical strength and a better catalyst performance can be produced, and the production cost of the denitration catalyst can be reduced since a zirconia sol which is an ordinary zirconia material is not used.

### Brief Description of Drawings

[Fig. 1] Fig. 1 is a flow sheet showing a performance test device of a denitration catalyst of the present invention.
[Fig. 2] Fig. 2 is a graph showing the analysis results of X-ray diffractiometry of the denitration catalysts.

### Description of Embodiments

Embodiments of the present invention will be described below, but the present invention is not limited to the embodiments.

The denitration catalyst according to the present invention is a denitration catalyst comprising, as a base material, a honeycomb structure consisting of an inorganic fiber sheet, which is characterized in that titania, vanadium oxide and/or tungsten oxide, and a zirconium compound (except for crystalline zirconium dioxide) as a shape-retaining binder are supported on the honeycomb structure.

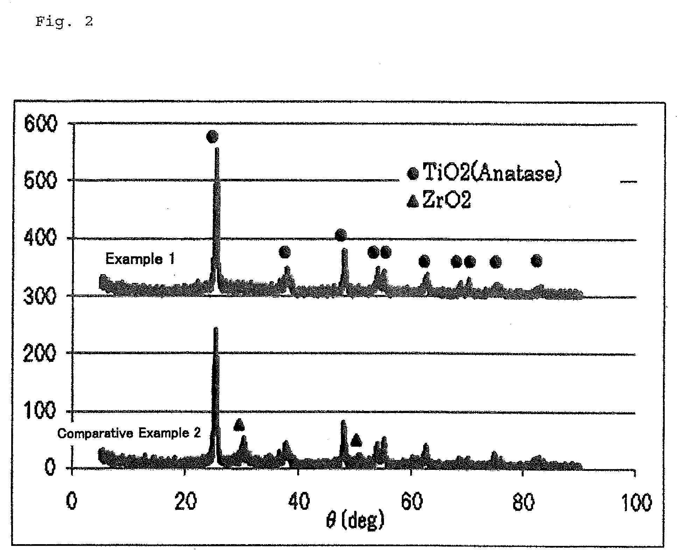

That is to say, as shown in the analysis of X-ray diffractiometry in Fig. 2 described later, the zirconium compound of the present invention is characterized in that it does not have a crystal structure of crystalline zirconium dioxide. Therefore, in the description herein, the term "zirconium compound (except for crystalline zirconium dioxide)" means one that contains substantially no crystalline zirconium dioxide. In the present invention, the zirconium compound is particularly preferably supported in the form of an amorphous zirconium compound. Specifically, the zirconium compound is preferably supported on the denitration catalyst in the form of amorphous zirconium oxide, amorphous zirconium acetate, amorphous zirconium chloride, or amorphous zirconium nitrate.

The zirconium compound (except for crystalline zirconium dioxide) as a shape-retaining binder is preferably contained in the catalyst in an element ratio of from 1 to 20% by weight in terms of oxide. The element ratio of the zirconium compound (except for crystalline zirconium dioxide) in the catalyst that is less than 1% by weight in terms of oxide is not preferred since the shape retention may become difficult, and the abrasion strength may also be lowered. The element ratio of the zirconium compound (except for crystalline zirconium dioxide) in the catalyst that exceeds 20% by weight in terms of oxide is not preferred since the amount of the catalyst component may be decreased to lower the activity.

The element ratio of the zirconium compound (except for crystalline zirconium dioxide) as a shape-retaining binder is more preferably from 12 to 18% by weight in terms of oxide. The element ratio of the zirconium compound (except for crystalline zirconium dioxide) in the catalyst that is 12% by weight or more in terms of oxide is preferred since the shape retention can be achieved more favorably. The element ratio of the zirconium compound (except for crystalline zirconium dioxide) in the catalyst that is 18% by weight or less in terms of oxide is economically preferred.

In the denitration catalyst according to the present invention, the inorganic fiber sheet is preferably a glass fiber sheet or a ceramic fiber sheet.

The method for producing a denitration catalyst according to the present invention is a method for producing a denitration catalyst comprising, as a base material, a honeycomb structure consisting of an inorganic fiber sheet, which is characterized in that the method comprises the steps of: preparing a slurry by adding ammonium metavanadate powder, or ammonium metavanadate powder and ammonium metatungstate to a slurry containing titania fine particles suspended in an aqueous solution of a zirconium salt; dipping a honeycomb structure consisting of an inorganic fiber sheet in the resulting slurry; taking out the structure from the slurry; then drying; and calcinating at 550°C or less.

More specifically, the method for producing a denitration catalyst according to the present invention includes the following two methods. As the first method, the method for producing a denitration catalyst according to the present invention is a method for producing a denitration catalyst comprising, as a base material, a honeycomb structure consisting of an inorganic fiber sheet, in which the method comprises the steps of: preparing a slurry by adding ammonium metavanadate powder to a slurry containing titania fine particles suspended in an aqueous solution of a zirconium salt, followed by stirring; dipping a honeycomb structure consisting of an inorganic fiber sheet in the resulting slurry; taking out the structure from the slurry; then drying; and calcinating at 550°C or less, thereby supporting titania, vanadium oxide, and the zirconium compound (except for crystalline zirconium dioxide) as a shape-retaining binder, on the honeycomb structure.

As the second method, the method for producing a denitration catalyst according to the present invention is a method for producing a denitration catalyst comprising, as a base material, a honeycomb structure consisting an inorganic fiber sheet, in which the method comprises the steps of: preparing a slurry by adding ammonium metavanadate powder and ammonium metatungstate to a slurry containing titania fine particles suspended in an aqueous solution of a zirconium salt; dipping a honeycomb structure consisting of an inorganic fiber sheet in the resulting slurry; taking out the structure from the slurry; then drying; and calcinating at 550°C or less, thereby supporting titania, vanadium oxide, tungsten oxide, and the zirconium compound (except for crystalline zirconium dioxide) as a shape-retaining binder, on the honeycomb structure.

In the method for producing a denitration catalyst according to the present invention, the calcination is preferably performed under a condition of from 300 to 550°C for from 1 to 4 hours.

Under this calcination condition, the calcination can be performed uniformly without reduction of the activity of the denitration catalyst. This is because when the calcination is performed at less than 300°C, the zirconium compound as a shape-retaining binder may not function as a binder to fail to retain the shape. This is also because it has been known that when the calcination is performed at a temperature exceeding 550°C, the zirconium compound may be crystallized to crystalline zirconium dioxide.

In the method for producing a denitration catalyst according to the present invention, the aqueous solution of the zirconium salt is preferably an aqueous solution of zirconium acetate (ZrO(C₂H₃O₂)₂), zirconium chloride (ZrO(Cl₂)H₂O), or zirconium nitrate (ZrO(NO₃)₂).

In the method for producing a denitration catalyst of the present invention, the honeycomb structure means an integrated structure consisting of a partitioning wall and plural through holes (cells) partitioned with the partitioning wall, through which an exhaust gas is capable of passing. The cross sectional shape of the through holes described above (i.e., the cross sectional shape of the cells) is not particularly limited, and examples thereof include a circular shape, a circular arc shape, a square shape, a rectangular shape, and a hexagonal shape.

In the method for producing a denitration catalyst of the present invention, the dipping of the honeycomb structure in the catalyst component-containing slurry includes a method (A) of dipping the honeycomb structure obtained by fabricating the inorganic fiber sheet to the honeycomb structure in advance, and a method (B) of dipping the inorganic fiber sheet as a material of the honeycomb structure in the form of a sheet.

In the method (A) described above, a slurry is prepared by adding ammonium metavanadate powder to a slurry containing titania fine particles suspended in an aqueous solution of a zirconium salt, followed by stirring, the structure having a honeycomb shape obtained by fabricating the inorganic fiber sheet to the honeycomb structure in advance is dipped in the resulting slurry, and the structure is taken out from the slurry, then dried under a condition of from 100 to 200°C for from 1 to 2 hours, and calcined under a condition of from 300 to 550°C for from 1 to 4 hours, thereby supporting titania, vanadium oxide, and the zirconium compound (except for crystalline zirconium dioxide) as a shape-retaining binder, on the honeycomb structure in order to provide a denitration catalyst.

In alternative, a slurry is prepared by adding ammonium metavanadate powder and ammonium metatungstate to a slurry containing titania fine particles suspended in an aqueous solution of a zirconium salt, the structure having a honeycomb shape obtained by fabricating the inorganic fiber sheet to the honeycomb structure in advance is dipped in the resulting slurry, and the structure is taken out from the slurry, then dried under a condition of from 100 to 200°C for from 1 to 2 hours, and calcined under a condition of from 300 to 550°C for from 1 to 4 hours, thereby supporting titania, vanadium oxide, tungsten oxide, and the zirconium compound (except for crystalline zirconium dioxide) as a shape-retaining binder, on the honeycomb structure in order to provide a denitration catalyst.

In the method (A) described above, the inorganic fiber sheet is preferably a glass fiber sheet or a ceramic fiber sheet.

In the method (B) described above, on the other hand, in order to produce a denitration catalyst comprising, as a base material, a honeycomb structure consisting of a glass fiber sheet, a slurry is prepared by adding ammonium metavanadate powder to a slurry containing titania fine particles suspended in an aqueous solution of a zirconium salt, followed by stirring, the glass fiber sheet is dipped in the resulting slurry, taken out from the slurry, and then dried under a condition of from 100 to 200°C for from 1 to 2 hours, or the catalyst-containing slurry is applied on the glass fiber sheet, then the catalyst-containing slurry-applied glass fiber sheet is corrugated with a corrugating die and a pressing jig, the corrugated catalyst-containing slurry-applied glass fiber sheet is dried under a condition of from 100 to 200°C for from 1 to 2 hours, followed by releasing from the die, separately the flat catalyst slurry-applied glass fiber sheet not corrugated is dried under a condition of from 100 to 200°C for from 1 to 2 hours, the corrugated catalyst-containing slurry-applied glass fiber sheet and the flat catalyst slurry-applied glass fiber sheet are calcined under a condition of from 300 to 550°C for from 1 to 4 hours, so as to form a catalyst-supporting flat glass fiber sheet and a catalyst-supporting corrugated glass fiber sheet each having supported thereon titania, vanadium oxide, and the zirconium compound (except for crystalline zirconium dioxide) as a shape-retaining binder, and the catalyst-supporting flat glass fiber sheet and the catalyst-supporting corrugated glass fiber sheet after calcination are stacked to form a catalyst-supporting honeycomb structure.

In alternative, in order to produce a denitration catalyst, a slurry is prepared by adding and stirring ammonium metavanadate powder to a slurry containing titania fine particles suspended in an aqueous solution of a zirconium salt and further adding ammonium metatungstate or an aqueous solution thereof, the glass fiber sheet is dipped in the slurry, taken out from the slurry, and then dried under a condition of from 100 to 200°C for from 1 to 2 hours, or the catalyst-containing slurry is applied on the glass fiber sheet, then the catalyst-containing slurry-applied glass fiber sheet is corrugated with a corrugating die and a pressing jig, the corrugated catalyst-containing slurry-applied glass fiber sheet is dried under a condition of from 100 to 200°C for from 1 to 2 hours, followed by releasing from the die, separately the flat catalyst slurry-applied glass fiber sheet not corrugated is dried under a condition of from 100 to 200°C for from 1 to 2 hours, the corrugated catalyst-containing slurry-applied glass fiber sheet and the flat catalyst slurry-applied glass fiber sheet are calcined under a condition of from 300 to 550°C for from 1 to 4 hours to form a catalyst-supporting flat glass fiber sheet and a catalyst-supporting corrugated glass fiber sheet each having supported thereon titania, vanadium oxide, tungsten oxide, and the zirconium compound (except for crystalline zirconium dioxide) as a shape-retaining binder, and the catalyst-supporting flat glass fiber sheet and the catalyst-supporting corrugated glass fiber sheet after calcination are stacked to form a catalyst-supporting honeycomb structure.

### Example

Examples of the present invention will be described with comparative examples, but the present invention is not limited to these examples.

### Example 1

A denitration catalyst according to the present invention was produced in the following manner. First of all, to a slurry containing titania fine particles suspended in an aqueous solution of 20% by weight of zirconium acetate (ZrO(C₂H₃O₂)₂) (Zircosol ZA-20, a trade name, produced by Daiichi Kigenso Kagaku Kogyo Co., Ltd.) (weight ratio of zirconium acetate and titania: 20/80), ammonium metavanadate powder was added in an amount of 10 g per 1 kg of the slurry, and the whole was stirred for 1 hour, to prepare a slurry. A structure in a honeycomb shape obtained by fabricating a ceramic fiber sheet into a honeycomb structure in advance was dipped in the slurry described above, taken out from the slurry, then dried at 110°C for 1 hour, and further calcined at 400°C for 1 hour, thereby supporting titania, vanadium oxide, and the zirconium compound (except for crystalline zirconium dioxide) as a shape-retaining binder, on the honeycomb structure to obtain a denitration catalyst according to the present invention.

### Example 2

A denitration catalyst according to the present invention was produced in the following manner. First of all, to a slurry containing titania fine particles suspended in an aqueous solution of 20% by weight of zirconium acetate (ZrO(C₂H₃O₂)₂)(weight ratio of zirconium acetate and titania: 20/80), ammonium metavanadate powder was added in an amount of 10 g per 1 kg of the slurry, and the whole was stirred for 1 hour. An aqueous solution of an ammonium metatungstate (3.88 mol/L) was further added to the slurry in an amount of 28 mL per 1 kg of the slurry, and the whole was stirred for 1 hour to obtain a slurry. A structure in a honeycomb shape obtained by fabricating a ceramic fiber sheet into a honeycomb structure in advance was dipped in the slurry described above, taken out from the slurry, then dried at 110°C for 1 hour, and further calcined at 400°C for 1 hour, thereby supporting titania, vanadium oxide, tungsten oxide, and the zirconium compound (except for crystalline zirconium dioxide) as a shape-retaining binder, on the honeycomb structure, to obtain a denitration catalyst according to the present invention.

### Example 3

A denitration catalyst according to the present invention was produced in the following manner. First of all, to a slurry containing titania fine particles suspended in an aqueous solution of 20% by weight of zirconium acetate (ZrO(C₂H₃O₂)₂) (weight ratio of zirconium acetate and titania: 20/80), ammonium metavanadate powder was added in an amount of 10 g per 1 kg of the slurry, and the whole was stirred for 1 hour. An aqueous solution of ammonium metatungstate (3.88 mol/L) was further added to the slurry described above in an amount of 28 mL per 1 kg of the slurry, and the whole was stirred for 1 hour to obtain the slurry. The slurry described above was applied on a flat glass fiber sheet, and the resulting catalyst-containing slurry-applied glass fiber sheet was corrugated, then dried at 110°C, and calcined at 400°C for 1 hour, thereby providing a catalyst-supported corrugated glass fiber sheet on which titania, vanadium oxide, tungsten oxide, and the zirconium compound (except for crystalline zirconium dioxide) as a shape-retaining binder were supported. Separately, the slurry described above was applied on a flat glass fiber sheet, and then the glass fiber sheet was dried at 110°C, and calcined at 400°C for 1 hour, thereby providing a catalyst-supported flat glass fiber sheet on which titania, vanadium oxide, tungsten oxide, and the zirconium compound (except for crystalline zirconium dioxide) as a shape-retaining binder were supported. The catalyst-supported flat glass fiber sheet and the catalyst-supported corrugated glass fiber sheet after calcination are stacked alternately, thereby providing the denitration catalyst according to the present invention.

### Example 4

A denitration catalyst according to the present invention was produced in the same manner as in Example 3 except that zirconium oxychloride (ZrOCl₂·H₂O) (Zirconium Oxychloride (Octahydrate), a trade name, produced by Kishida Chemical Co., Ltd.) was used instead of zirconium acetate in Example 3.

### Example 5

A denitration catalyst according to the present invention was produced in the same manner as in Example 3 except that zirconium nitrate (ZrO(NO₃)₂) (Zirconium(IV) Nitrate Oxide, a trade name, produced by Mitsuwa Chemicals Co., Ltd.) was used instead of zirconium acetate in Example 3.

### Example 6

A denitration catalyst according to the present invention was produced in the same manner as in Example 1 except that the weight ratio of zirconium acetate and titania in the slurry containing titania fine particles suspended in the aqueous solution of 20% by weight of zirconium acetate (ZrO(C₂H₃O₂)₂) (Zircosol ZA-20, a trade name, produced by Daiichi Kigenso Kagaku Kogyo Co., Ltd.) was changed to 5/80.

### Example 7

A denitration catalyst according to the present invention was produced in the same manner as in Example 1 except that the weight ratio of zirconium acetate and titania in the slurry containing titania fine particles suspended in the aqueous solution of 20% by weight of zirconium acetate (ZrO(C₂H₃O₂)₂) (Zircosol ZA-20, a trade name, produced by Daiichi Kigenso Kagaku Kogyo Co., Ltd.) was changed to 1.25/80.

### Comparative Example 1

A denitration catalyst for comparison was produced in the following manner. First of all, to a slurry containing titania fine particles suspended in 20% by weight of a silica sol (weight ratio of silica and titania: 20/80), ammonium metavanadate powder was added in an amount of 10 g per 1 kg of the slurry, and the whole was stirred for 1 hour. A structure in a honeycomb shape obtained by fabricating a ceramic fiber sheet into a honeycomb structure in advance was dipped in the slurry described above, taken out from the slurry, then dried at 110°C for 1 hour, and further calcined at 400°C for 1 hour to obtain the denitration catalyst for comparison.

### Comparative Example 2

A denitration catalyst for comparison was obtained in the same manner as in Example 3 except that the calcination temperature in Example 3 was changed to 600°C. In this case, the denitration catalyst for comparison was obtained in which titania, vanadium oxide, tungsten oxide, and a crystalline zirconium compound were supported on the honeycomb structure, due to the high calcination temperature.

### Evaluation

The denitration catalysts of Examples 1 to 7 according to the present invention and Comparative Examples 1 and 2 were measured for the zirconium content (which was the measurement result in terms of oxide) with a X-ray fluorescent analysis equipment (SEA1200VX, a trade name, produced by Seiko Instruments Inc.). The denitration catalysts were analyzed for the crystal structure with an X-ray diffraction analysis equipment (MALTIFLEX, a trade name, produced by Rigaku Corporation). The results obtained are shown in Table 1 below.

The denitration catalysts of Examples 1 to 7 according to the present invention and Comparative Examples 1 and 2 were measured for the denitration performance, and the results obtained are shown in Table 1 below. The denitration performance of the denitration catalyst is expressed by the denitration performance ratio with respect to the denitration performance of the catalyst of Comparative Example 1 as 1.

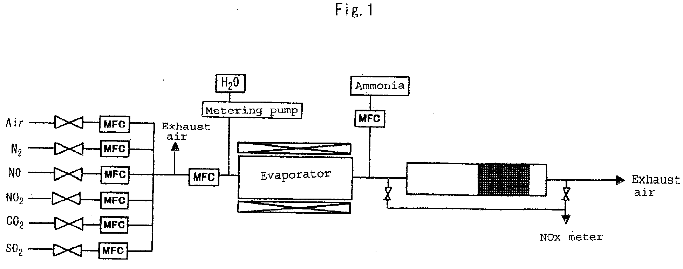

The denitration performance test of the catalyst was performed with a denitration catalyst performance test equipment having the flow sheet shown in Fig. 1 under the conditions shown in Table 2 below. In Table 2 below, "Balance" means a material that is added to make the gas composition of 100% in total, and shows that the gas composition except for NH₃, NO, and H₂O is occupied by the air (which is shown as Air in the table).

The denitration catalysts of Examples 1 to 7 according to the present invention and Comparative Examples 1 and 2 were further subjected to a test measurement of the shape retaining characteristics by determining the catalyst shape after immersing the denitration catalyst in a 1 N NaOH aqueous solution for 1 hour, and the results obtained are shown in Table 1 below.

The denitration catalysts of Examples 1 to 7 according to the present invention and Comparative Examples 1 and 2 were subjected to a test measurement of the abrasion strength by measuring the abrasion depth (mm) formed by scraping the catalyst after blowing coal-fired boiler ash having an average particle diameter of 84 µm to the denitration catalyst at a dust concentration of 1,000 g/h for 1 hour, and the results obtained are shown in Table 1 below.

**Table 1**

| Catalyst | Zirconium content (% by weight in terms of oxide) | Crystal structure | Performance ratio (ratio with denitration performance of Comparative Example 1 as 1) | Shape retention | Abrasion depth (mm) |
|---|---|---|---|---|---|
| Example 1 | 16.1 | TiO₂ (anatase) | 1.0 | ○ | 7.0 |
| Example 2 | 15.5 | TiO₂ (anatase) | 1.0 | ○ | 7.5 |
| Example 3 | 15.5 | TiO₂ (anatase) | 1.0 | ○ | 8.5 |
| Example 4 | 12.9 | TiO₂ (anatase) | 1.0 | ○ | 8.0 |
| Example 5 | 15.2 | TiO₂ (anatase) | 1.0 | ○ | 8.3 |
| Example 6 | 4.2 | TiO₂ (anatase) | 1.0 | ○ | 8.1 |
| Example 7 | 1.1 | TiO₂ (anatase) | 1.0 | ○ | 9.0 |
| Comparative Example 1 | 16.1 | TiO₂ (anatase) | 1.0 | × | 9.3 |
| Comparative Example 2 | 15.5 | TiO₂ (anatase) +ZrO₂ (tetragonal) | 0.7 | ○ | 8.7 |

**Table 2**

| | |
|---|---|
| Temperature | 350°C |
| NOₓ concentration at inlet | 100 ppm |
| NH₃/NO | 1.0 |
| H₂O | 10 vol% |
| Balance | Air |

It is clear from the result of Table 1 described above that the denitration catalysts obtained in Examples 1 to 7 of the invention retain the catalyst shape in the alkali treatment (immersion in 1 N NaOH aqueous solution), and have sufficient abrasion resistance in the catalyst abrasion depth test by blowing coal-fired boiler ash to the denitration catalysts obtained in Examples 1 to 7 of the present invention, and therefore it is understood that the denitration catalysts used for a denitration treatment of a combustion exhaust gas, for example, from a coal-fired boiler or the like, have a sufficient mechanical strength capable of retaining the catalyst shape in an alkali treatment conducted for regenerating the performance of the denitration catalyst having been aged and deteriorated.

On the other hand, in the ordinary denitration catalyst using a silica sol, silica was eluted in the alkali treatment, and the catalyst was not able to retain the catalyst shape.

The graphs of analysis results of X-ray diffractiometry of the denitration catalyst of Example 1 according to the present invention and the denitration catalyst of Comparative Example 2 are shown in Fig. 2.

It is clear from the results in Fig. 2 that in the denitration catalyst obtained in Example 1 of the present invention, only the peak assigned to anatase TiO₂ (titania) is obtained since the zirconium compound as a shape-retaining binder is the zirconium compound (except for crystalline zirconium dioxide), whereas in the denitration catalyst for comparison obtained in Comparative Example 2, a peak assigned to tetragonal ZrO₂ (zirconia) is obtained (around 2θ = 30) since the zirconium compound as a shape-retaining binder is the crystalline zirconium oxide, and the denitration catalyst for comparison has a denitration performance of 0.7 with respect to the denitration performance of the catalyst of Comparative Example 1 as 1, and thus is inferior in denitration performance.

In the denitration catalysts obtained in Examples 2 to 7 of the invention, the peak assigned to anatase TiO₂ (titania) is obtained, a peak assigned to tetragonal ZrO₂ (zirconia) is not obtained.

## Claims

1. A denitration catalyst comprising, as a base material, a honeycomb structure consisting of an inorganic fiber sheet, which is **characterized in that** titania, vanadium oxide and/or tungsten oxide, and a zirconium compound (except for crystalline zirconium dioxide) as a shape-retaining binder are supported on the honeycomb structure.

2. The denitration catalyst according to claim 1, which is **characterized in that** the zirconium compound (except for crystalline zirconium dioxide) as a shape-retaining binder is contained in the catalyst in an element ratio of from 1 to 20% by weight in terms of oxide.

3. The denitration catalyst according to claim 1, which is **characterized in that** the inorganic fiber sheet is a glass fiber sheet or a ceramic fiber sheet.

4. A method for producing a denitration catalyst comprising, as a base material, a honeycomb structure consisting of an inorganic fiber sheet, which is **characterized in that** the method comprises the steps of: preparing a slurry by adding ammonium metavanadate powder, or ammonium metavanadate powder and ammonium metatungstate to a slurry containing titania fine particles suspended in an aqueous solution of a zirconium salt; dipping a honeycomb structure consisting of an inorganic fiber sheet in the resulting slurry; taking out the structure from the slurry; then drying; and calcinating at 550°C or less.

5. A method for producing a denitration catalyst comprising, as a base material, a honeycomb structure consisting an inorganic fiber sheet, which is **characterized in that** the method comprises the steps of: preparing a slurry by adding ammonium metavanadate powder, or ammonium metavanadate powder and ammonium metatungstate to a slurry containing titania fine particles suspended in an aqueous solution of a zirconium salt; dipping an inorganic fiber sheet in the resulting slurry, taking out the sheet from the slurry, and then drying, or applying the resulting slurry on an inorganic fiber sheet; then producing a catalyst-containing fiber sheet in a corrugated shape from a part of the resulting catalyst-containing fiber sheet in a flat shape through a corrugating process; calcinating the catalyst-containing fiber sheets in a flat shape and a corrugated shape at 550°C or less; and stacking alternately the calcined catalyst-containing fiber sheets in a flat shape and a corrugated shape, so as to form a catalyst-supporting honeycomb structure.

6. The method for producing a denitration catalyst according to claim 4 or 5, which is **characterized in that** the calcination is performed at from 300 to 550°C.

7. The method for producing a denitration catalyst according to claim 4 or 5, which is **characterized in that** the aqueous solution of the zirconium salt is an aqueous solution of zirconium acetate, zirconium chloride, or zirconium nitrate.
